# EUROPEAN PATENT APPLICATION

(11) **EP 4 376 249 A1**
(43) Date of publication of application: **29.05.2024**
(21) Application number: 22209808.9
(22) Date of filing: 28.11.2022
(51) Int. Cl.: H02J 3/38, F03D 9/19, H02J 3/28, H02J 15/00

(54) **HYDROGEN PRODUCTION APPARATUS, ELECTRICAL ENERGY SUPPLY ARRANGEMENT AND METHOD FOR OPERATING A HYDROGEN PRODUCTION APPARATUS**

(71) Applicant: Siemens Gamesa Renewable Energy A/S, 7330 Brande (DK)
(72) Inventor: Hellstern, Henrik Christian Lund, 8210 Aarhus V (DK)
(74) Representative: SGRE-Association

(57) **Abstract**

A hydrogen production apparatus (11) for an intermittent power source (2) and/or an electrical grid, comprising:
a hydrogen production unit (19) for producing hydrogen gas (12),
a first compressor unit (21) for compressing the produced hydrogen gas,
a tank (25) for storing the gas compressed by the first compressor unit (21), the tank comprising a first and a second outlet (28, 29),
a second compressor unit (30) fluidly connected to the second outlet of the tank (25) for compressing hydrogen gas supplied from the tank, the second compressor unit comprising an outlet (33), and
a dispensing unit (34) fluidly connected to both the first outlet of the tank and the outlet of the second compressor unit for dispensing gas from the hydrogen production apparatus.

By storing hydrogen gas in the tank, hydrogen gas can be dispensed from the hydrogen production apparatus even in times of low hydrogen production such as low wind speeds.

## Description

The present invention relates to a hydrogen production apparatus for an intermittent power source and/or an electrical grid, an electrical energy supply arrangement with such a hydrogen production apparatus, and a method for operating a hydrogen production apparatus of an electrical energy supply arrangement.

Hydrogen gas produced from renewable energies such as wind power provides a so-called green hydrogen that can replace fossil fuels. For example, green hydrogen gas can be used in fuel cell vehicles.

A hydrogen gas production facility is typically comprised of an electrolyzer connected to an offtake system which could be a tube trailer or a gas pipeline. Production of green hydrogen by a hydrogen gas production facility is challenged by the intermittent availability of the energy source and, possibly (e.g., in case of an offtake system including tube trailers) also the offtake system. For example, a tube trailer ready for filling has to be present on site simultaneously with the power production from renewable sources. Hence, the production and offtake of hydrogen gas are coupled which lowers the overall system availability.

It is one object of the present invention to provide an improved hydrogen production apparatus and an improved method for operating a hydrogen production apparatus.

Accordingly, a hydrogen production apparatus for an intermittent power source and/or an electrical grid is provided. The hydrogen production apparatus comprises:
a hydrogen production unit for producing hydrogen gas from electrical energy generated by the intermittent power source and/or supplied by the electrical grid,
a first compressor unit for compressing the produced hydrogen gas,
a tank for storing the gas compressed by the first compressor unit, the tank comprising a first and a second outlet,
a second compressor unit fluidly connected to the second outlet of the tank for compressing hydrogen gas supplied from the tank, the second compressor unit comprising an outlet, and
a dispensing unit fluidly connected to both the first outlet of the tank and the outlet of the second compressor unit for dispensing gas from the hydrogen production apparatus.

By storing hydrogen gas in the tank and decoupling the inlet and outlet side of the tank by two compressor stages, hydrogen gas can be dispensed from the hydrogen production apparatus even in times of low hydrogen production such as low wind speeds.

In particular, the first and second compressor units provide two separate compression stages. Hydrogen gas is compressed by the first compressor unit to a first pressure value. Further, hydrogen gas compressed by the first compressor unit is further compressed by the second compressor unit to a second pressure value, the second pressure value being larger than the first pressure value.

Having the two compressor units and the tank arranged in terms of gas flow between them, allows to decouple the production of hydrogen gas and the offtake of hydrogen gas from the hydrogen production apparatus. For example, two independent dispensing units can be feed in parallel, e.g., two tube trailers may be filled simultaneously. In particular, hydrogen gas is produced by the hydrogen production unit (e.g., electrolysis device) at low pressure (e.g., 35 bar). Further, hydrogen gas is dispensed from the hydrogen production apparatus at high pressure (e.g., 500 bar). The proposed tank for storing the hydrogen gas compressed by the first compressor unit is, in particular, a medium pressure (e.g., 200 bar, 300 bar) gas storage unit with two different compression systems (the first and second compressor units) at the inlet and outlet side, respectively. By storing hydrogen gas in the tank (at medium pressure), the production of hydrogen gas which depends on the wind conditions can be decoupled from the offtake of hydrogen gas which might depend on the availability of tube trailers.

Since the dispensing unit is fluidly connected to both the first outlet of the tank and the outlet of the second compressor unit, hydrogen gas can be dispensed from the hydrogen production apparatus by providing hydrogen gas directly from the tank to the dispensing unit (first path) and/or by providing hydrogen gas via the second compressor unit to the dispensing unit (second path). In particular, the hydrogen production apparatus is configured such that a gas flow via both the first and the second path is possible. Further, the hydrogen production apparatus is, for example, configured such that a gas flow is provided subsequently via the first path and the second path.

Filling from both the (first) gas tank via the first path at medium pressure and from the high-pressure compressor (second compressor unit) via the second path at high pressure enables the filling process to be split into two steps, which allows for filling of two tube trailers in parallel, though in separate filling cycles (with and without second compressor action, respectively).

Further, if there is no or only little hydrogen production (e.g., at low wind conditions), hydrogen gas can still be dispensed from the hydrogen production apparatus by use of the (first) tank (and in embodiments also by use of a second tank). Thus, for example, a tube trailer fleet can still be filled.

The intermittent power source is, for example, a renewable energy installation such as a wind turbine, a solar power installation and/or a water power installation.

The wind turbine is an apparatus to convert the wind's kinetic energy into electrical energy. The wind turbine comprises, for example, a rotor having one or more blades connected each to a hub, a nacelle including a generator, and a tower holding, at its top end, the nacelle. The tower of the wind turbine may be connected via a transition piece to a foundation of the wind turbine, such as a concrete foundation or a monopile in the seabed.

The wind turbine is, for example, an onshore wind turbine. The wind turbine may, however, also be an offshore wind turbine. Offshore includes marine environments as well as lakes and other open waters.

In the case of an onshore wind turbine, the hydrogen production apparatus including the hydrogen production unit and the compressor units is, for example, arranged, on the ground next to the wind turbine. The hydrogen production apparatus is, for example, arranged within a distance of 1000 meters or less, of 500 meters or less, 200 meters or less, 100 meters or less and/or 50 meters or less from the foundation of the wind turbine. In addition or instead, for safety reasons, the hydrogen production apparatus is, for example, arranged within a distance of at least 200 meters, at least 300 meters and/or at least 500 meters from the foundation of the wind turbine.

In the case of an offshore wind turbine, the hydrogen production apparatus may, for example, also be arranged at least partly on an outside platform of the tower of the wind turbine.

The hydrogen production unit is, in particular, configured for producing hydrogen gas from water and electrical energy generated by the intermittent power source such as the wind turbine or another renewable energy installation. The hydrogen production unit (e.g., electrolysis device) converts, for example, water into hydrogen gas by using the electrical current produced by the generator of the intermittent power source. Thereby, water is separated into hydrogen and oxygen by an electrolysis process in the hydrogen production unit.

The hydrogen gas produced by the hydrogen production unit has, for example, a pressure of 100 bar or smaller, 50 bar or smaller and/or 30 bar or smaller. The first compressor unit compresses the produced hydrogen gas, for example, to a pressure of 100 bar or larger, 200 bar or larger and/or 300 bar or larger. The second compressor unit compresses the hydrogen gas supplied from the tank (and compressed before by the first compressor unit), for example, to a pressure of 300 bar or larger, 400 bar or larger, 500 bar or larger and/or 600 bar or larger. In particular, the hydrogen gas is compressed by the second compressor unit to a pressure value that is larger than a pressure value to which the first compressor unit compresses the hydrogen gas.

The hydrogen gas is compressed by the respective compressor unit by reducing its volume. Compressing the gas allows transportation of a larger volume of gas per time and, thus, a more efficient and faster transportation of the gas. The compressed gas is, for example, transported by means of pressure vessels on a road such as tube trailers. The compressed gas may also be transported, for example, by means of gas pipes.

The dispensing unit comprises, for example, a connection portion for fluid connection with a transportation pipe, the transportation pipe being configured for fluid connection with a tank of a transportation vessel or being part of pipe system for long-distance gas transportation.

The hydrogen gas produced by the hydrogen production apparatus is, for example, used in a fuel cell and/or a fuel cell system such as a fuel cell vehicle or a fuel cell power system (stationary fuel cell used for the generation of electricity) .

A fuel cell is an electrochemical device that converts the chemical energy of a fuel (e.g., hydrogen gas) and an oxidant to electrical energy (DC power), heat or other reaction products.

The hydrogen production apparatus comprises, for example, one or more connecting pipes fluidly connecting the hydrogen production unit and the first compressor unit, the first compressor unit and the tank (first tank), the first outlet of the tank and the dispensing unit, the second outlet of the tank and the second compressor unit, and/or the outlet of the second compressor unit and the dispensing unit. Said pipes are, in particular, gas pipes (e.g., gas-tight pipes).

The hydrogen production apparatus may - instead of for a wind turbine - also be applied to other renewable energy installations such as solar plants, photovoltaic (PV) plants, hydropower plants, hydroelectric plants and/or tidal power plants.

Furthermore, the hydrogen production apparatus may also be used as a grid connected electrolyzer of an electrical grid which is operated based on power price fluctuations and/or based on the demands of the electrical grid.

The electrical grid is an interconnected network for electricity delivery from producers to consumers.

Operation of a large electrical grid at nearly constant frequency is important for the power generators of the grid to remain synchronized. When the amount of electricity consumed from the grid changes, feeding of electrical energy into the grid and/or loads of the grid must be controlled accordingly.

The proposed hydrogen production apparatus may be used to control the amount of electrical energy provided to the electrical grid and/or as a load of the electrical grid.

According to an embodiment, the hydrogen production apparatus comprises two or more dispensing units each being fluidly connected to both the first outlet of the tank and the outlet of the second compressor unit for dispensing gas from the hydrogen production apparatus.

Having two dispensing units and said decoupling of the hydrogen production side and the offtake side of the tank by means of the two compressor units allows simultaneous dispensing of hydrogen gas from the two dispensing units. In particular, simultaneous dispensing of hydrogen gas from the two dispensing units is possible without decreasing the flow rate and/or without increasing the filling duration. For example, simultaneous filling of two tube trailers is possible within the same time used conventionally to fill only a single tube trailer.

According to a further embodiment, the second compressor unit is configured to compress the hydrogen gas supplied from the tank to a pressure at or above a predetermined pressure value of an offtake system.

The offtake system includes, for example, one or more transportation vessels such as a tube trailers. The offtake system may also include, for example, a transportation pipe for long-distance gas transportation.

According to a further embodiment, the tank for storing the gas compressed by the first compressor unit is a first tank, the hydrogen production apparatus comprises a second tank fluidly connected to the second compressor unit for storing the gas compressed by the second compressor unit, and the second tank is fluidly connected to the one or more dispensing units for supplying hydrogen gas from the second tank to the one or more dispensing units.

By having the second tank (high pressure tank) for storing hydrogen gas further compressed by the second compressor unit and being in a high-pressure state, the gas flow via the second compressor unit to the dispensing unit can be boosted.

In particular, the second tank can be used to support the second compressor unit (high pressure compressor) during dispensing of hydrogen gas from the hydrogen production apparatus. Further, by the support provided by the second tank, a combined high flow rate of the dispensed gas can be achieved. Further, such a combined high flow rate can be achieved, for example, even when using a second compressor unit with only a small capacity (i.e. which provides only a small flow rate).

Moreover, a filling rate can be increased and a filling duration can be decreased because hydrogen gas is supplied to the dispensing unit from gas storages (first and second tank) at both medium and high pressure (first and second flow paths), e.g., during a first and second time period.

Further, during times when no hydrogen gas is released from the dispensing unit (i.e. no offtake, e.g., no available tube trailer), the second compressor unit can still continue to compress hydrogen gas by filling the second tank. Hence, the second compressor unit can be configured with relaxed flow rate requirements which reduces costs and increased the lifetime of the second compressor.

Alternatively, during times when no hydrogen gas is released from the dispensing unit (i.e. no offtake, e.g., no available tube trailer), the second compressor unit can be switched off which significantly reduces the power consumption of the second compressor unit (high-pressure compressors typically have a high power consumption even in standby modus).

In embodiments, the hydrogen production apparatus comprises a valve for the high-pressure tank inlet (inlet of the second tank). For an example, the pressure of the gas in the high-pressure tank (second tank) will decrease during extended tube trailer filling without gas production. When the second tank pressure decreases to below the tube trailer filling setpoint, then the inlet valve is closed and the gas is injected directly from the high pressure compressor outlet into the dispenser and tube trailer. This will be at a lower flow rate compared to the gas flow from the high-pressure tank. This scenario reflects a high offtake demand.

According to a further embodiment, the hydrogen production apparatus comprises a bypass pipe fluidly connecting the first tank and the second tank for supplying hydrogen gas from the second tank to the first tank.

In case that the hydrogen production apparatus comprises multiple first and/or second tanks, the hydrogen production apparatus may further comprise one or more manifolds for fluidly connecting the one or more first tanks and the one or more second tanks by the bypass pipe.

Providing the bypass pipe opens a direct fluid connection between the first and second tanks. Hence, hydrogen gas in the second tank can be re-directed to the first tank and can then pass again through the second compressor unit. Hence, the gas can be compressed once more by the second compressor unit and the pressure of the hydrogen gas can be increased.

Thus, a sufficient flow rate and gas pressure at the dispensing unit can be provided even in low wind conditions, low hydrogen production conditions, in conditions in which the first tank is partly or fully depleted, and/or in conditions in which a pressure in the second tank has fallen below a predetermined value.

For example, when the pressure in both tanks have decreased below predetermined values, gas from the second tank can be passed into the first tank and pressurized by the second compressor directly into the tube trailer. This example reflects an extended high offtake demand during times of no gas production (no wind), where the high-pressure compressor is otherwise unable to provide hydrogen directly to the tube trailer due to low inlet pressure.

According to a further embodiment, the hydrogen production apparatus comprises a control unit for controlling a gas flow of the hydrogen production apparatus such that:
during a first time period, hydrogen gas is supplied directly from the first tank to the dispensing unit, and
during a second time period, hydrogen gas is supplied via the second compressor unit to the dispensing unit.

The control unit is, for example, configured to control the first tank and the second compressor unit and/or the second tank such that their supply of hydrogen gas to the dispensing unit is controlled.

For example, during the first time period, hydrogen gas is supplied to the dispensing unit only directly from the first tank. This means, a fluid connection via the second compressor unit to the dispensing unit is closed during the first time period.

For example, during the second time period, hydrogen gas is supplied to the dispensing unit only via the second compressor unit. This means, a direct fluid connection from the first tank to the dispensing unit is closed during the second time period.

In embodiments in which the hydrogen production apparatus comprises a second tank for storing the hydrogen gas compressed by the second compressor unit, the control unit may be configured to control the second tank such that the supply of hydrogen gas from the second tank to the dispensing unit is controlled. Further, In embodiments in which the hydrogen production apparatus comprises the second tank, hydrogen gas may be supplied to the dispensing unit during the second time period via the second compressor unit and the second tank, i.e., directly from the second tank.

According to a further embodiment, the hydrogen production apparatus comprises:
multiple first compressor units and a manifold for supplying the hydrogen gas produced by the hydrogen production unit to the multiple first compressor units,
multiple first tanks and a manifold for supplying the hydrogen gas compressed by the one or more first compressor units to the multiple first tanks,
multiple second compressor units and a manifold for supplying the hydrogen gas from the one or more first tanks to the multiple second compressor units, and/or
multiple second tanks and a manifold for supplying the hydrogen gas compressed by the one or more second compressor units to the multiple second tanks.

By having more than one first compressor unit, more than one first tank, more than one second compressor unit, and/or more than one second tank, the respective compressing capacity or storing capacity can be increased.

For example, multiple first tanks can be filled with hydrogen in cascade or at once. Further, multiple first tanks can be discharged to the dispensing unit in cascade or at once. Similar charging and discharging schemes can be applied of the second tank.

For example, when using the multiple first tanks for partial filling of tube trailers (e.g., by transferring gas from a 200 bar first tank into a 30 bar tube trailer), a cascade filling process in which the multiple first tanks are opened in sequence can be applied. When pressures are balanced, the filling process is transferred to the high-pressure compressor section (second compressor unit and second tanks).

Further, for simultaneous feeding of more than two independent dispensing units (e.g., for simultaneous and/or overlapping filling of more than two tube trailers), an identical further offtake section could be established, the further offtake section comprising at least one further second compressor unit fluidly connected to one or more further dispensing units. In addition, the one or more further dispensing units are fluidly connected to the same (first) tank as the second compressor unit.

In case that the hydrogen production apparatus comprises multiple second tanks, the manifold for supplying the hydrogen gas compressed by the one or more second compressor units to the multiple second tanks may also be used for supplying hydrogen gas form the multiple second tanks to the dispensing unit(s). Alternatively, the hydrogen production apparatus may comprise - in addition to the manifold for supplying the hydrogen gas compressed by the one or more second compressor units to the multiple second tanks - a further manifold for supplying hydrogen gas form the multiple second tanks to the dispensing unit(s).

According to a further embodiment, the first compressor unit comprises a reciprocating compressor, positive displacement compressor and/or a piston compressor, and/or
the second compressor unit comprises a diaphragm compressor, reciprocating compressor, positive displacement compressor and/or piston compressor.

A reciprocating compressor, positive displacement compressor and/or a piston compressor provides a high flow rate which is of advantage for the first compressor unit which needs to transfer the high flow rate from the hydrogen production unit.

In a positive displacement compressor, a certain inlet volume of the produced hydrogen gas is confined in a given space and subsequently compressed by reducing this confined volume or space such that its pressure increases. The compressed gas is then discharged from the compressor unit. A piston compressor is a type of a positive displacement compressor and comprises a compression chambre and a piston. The compressible fluid is compressed through the back-and-forth motion of the piston.

A diaphragm compressor provides a high pressure which is of advantage for the second compressor unit which needs to provide the predetermined dispensing pressure of the offtake system (e.g., 450 bar). However, other compressor technologies may also be applicable for the second compressor unit, e.g., due to the high inlet pressure available in the first tank and the comparatively low compression factor.

In a diaphragm compressor, the compression of gas occurs by means of a flexible membrane. The back-and-forth moving membrane is driven, for example, by a rod and a crankshaft mechanism. Only the membrane and the compressor box come in touch with pumped gas.

According to a further embodiment, the hydrogen production apparatus comprises a further tank fluidly connected to the hydrogen production unit and the first compressor unit. The further tank is arranged upstream of the first compressor unit. Furthermore, the further tank is configured for storing hydrogen gas produced by the hydrogen production unit and for supplying the stored hydrogen gas to the first compressor unit.

By providing the further tank, the inlet pressure of the first tank can be stabilized. In the further tank, hydrogen gas at low pressure - as produced by the hydrogen production unit - is stored temporarily and/or on a short term.

According to a further aspect, an electrical energy supply arrangement is provided. The electrical energy supply arrangement comprises an intermittent power source and/or an electrical grid, and an above-described hydrogen production apparatus. Further, the hydrogen production unit of the hydrogen production apparatus is configured for producing hydrogen gas from electrical energy generated by the intermittent power source and/or supplied by the electrical grid.

According to a further aspect, a wind turbine arrangement is provided. The wind turbine arrangement comprises a wind turbine and an above-described hydrogen production apparatus.

According to a further aspect, a renewable energy production system is provided. The renewable energy production system comprises a renewable energy installation (e.g., a solar plant, waterpower plant or the like) and an above-described hydrogen production apparatus.

According to a further aspect, a method for operating a hydrogen production apparatus of an electrical energy supply arrangement is provided. The electrical energy supply arrangement comprises an intermittent power source and/or an electrical grid. The method comprises the steps:
a) producing hydrogen gas by electrolysis from electrical energy supplied by the intermittent power source and/or the electrical grid,
b) compressing the produced hydrogen gas by a first compressor unit,
c) storing the gas compressed by the first compressor unit in a tank,
d) compressing hydrogen gas supplied from the tank by a second compressor unit, and
e) dispensing hydrogen gas from the hydrogen production apparatus by providing hydrogen gas directly from the tank and/or from the second compressor unit.

In step e), hydrogen gas is, for example, sequentially provided directly from the tank (i.e. via a first path) and via the second compressor unit (i.e. via a second path).

The method may also be applied for operating a hydrogen production apparatus of a renewable energy production system.

According to an embodiment of the method, the hydrogen gas is dispensed by the hydrogen production apparatus:
during a first time period, by providing hydrogen gas directly from the tank to a dispensing unit of the hydrogen production apparatus, and
during a second time period, by providing hydrogen gas via the second compressor unit to the dispensing unit.

According to a further embodiment of the method, during the second time period, hydrogen gas is dispensed by the hydrogen production apparatus by providing hydrogen gas directly from the tank to a further dispensing unit of the hydrogen production apparatus.

Thus, hydrogen gas is provided at two separate dispensing units - the (first) dispensing unit and the further/second dispensing unit - independently from each other.

For example, during the first time period, hydrogen gas is discharged only at the first dispensing unit, the hydrogen gas being provided to the first dispensing unit directly from the first tank (first path). Further, during the second time period, hydrogen gas is discharged at both the first and the second dispensing units (e.g., to fill two tube trailers simultaneously), wherein the hydrogen gas is provided to the first dispensing unit via the second compressor unit (second path) and is provided to the second dispensing unit directly from the first tank (further first path).

According to a further embodiment of the method,
the tank for storing the gas compressed by the first compressor unit is a first tank, and
the method comprises, after step d), the step of storing the hydrogen gas compressed by the second compressor unit in a second tank.

The respective entity, e.g., the control unit, may be implemented in hardware and/or in software. If said entity is implemented in hardware, it may be embodied as a device, e.g. as a computer or as a processor or as a part of a system, e.g. a computer system. If said entity is implemented in software it may be embodied as a computer program product, as a function, as a routine, as a program code or as an executable object.

According to a further embodiment of the hydrogen production apparatus, the electrical energy supply arrangement, and/or the method, the intermittent power source is a renewable energy installation, a wind turbine, a solar power installation, a photovoltaic installation, a water power installation, a hydropower installation, a hydroelectric installation and/or a tidal power installation.

The embodiments and features described with reference to the apparatus of the present invention apply mutatis mutandis to the method of the present invention.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine arrangement according to a first embodiment;
Fig. 2 shows a wind turbine arrangement according to a second embodiment;
Fig. 3 shows a schematic view of a hydrogen production apparatus of the wind turbine of Fig. 1 or 2 according to an embodiment;
Fig. 4 shows a schematic view of a hydrogen production apparatus of the wind turbine of Fig. 1 or 2 according to a further embodiment;
Fig. 5 shows a schematic view of a hydrogen production apparatus of the wind turbine of Fig. 1 or 2 according to a further embodiment; and
Fig. 6 shows a flowchart illustrating a method for operating a hydrogen production apparatus of the wind turbine of Fig. 1 or 2, according to an embodiment.

In the Figures, like reference numerals designate like or functionally equivalent elements, unless otherwise indicated.

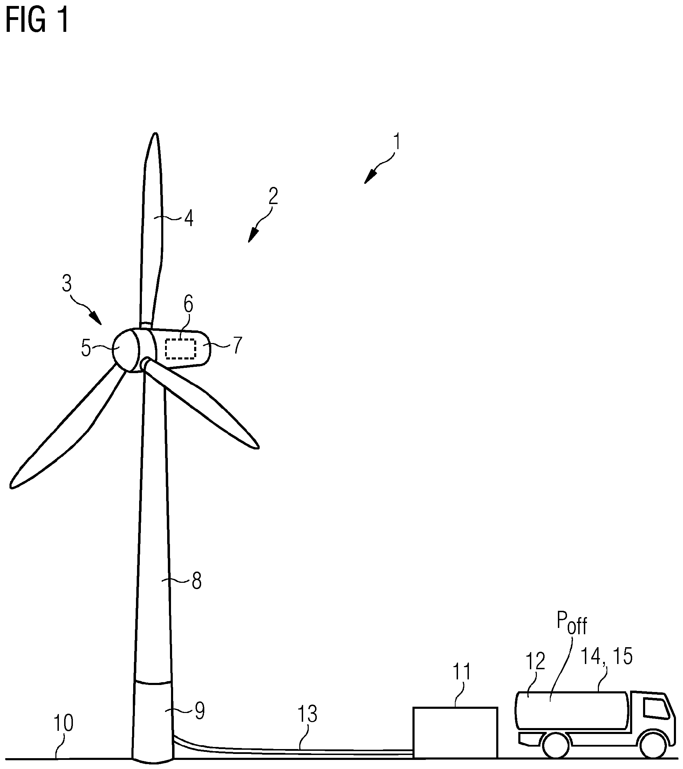

Fig. 1 shows a wind turbine arrangement 1 (as an example of an electrical energy supply arrangement) according to a first embodiment. The wind turbine arrangement 1 is an onshore wind turbine arrangement comprising a wind turbine 2 (as an example of an intermittent power source). The wind turbine 2 comprises a rotor 3 having one or more blades 4 connected to a hub 5. The hub 5 is connected to a generator 6 arranged inside a nacelle 7. During operation of the wind turbine 2, the blades 4 are driven by wind to rotate and the wind's kinetic energy is converted into electrical energy by the generator 6 in the nacelle 7. The nacelle 7 is arranged at the upper end of a tower 8 of the wind turbine 2. The tower 8 is erected on a foundation 9 such as a concrete foundation. The foundation 9 is anchored in the ground 10.

The wind turbine arrangement 1 further comprises a hydrogen production apparatus 11 for converting the electrical energy generated by the generator 6 into hydrogen gas 12.

Further, the wind turbine arrangement 1 comprises, for example, an electrical cable 13 for transporting electrical current generated by the generator 6 of the wind turbine 2 to the hydrogen production apparatus 11. To transport produced hydrogen gas 12 from the hydrogen production apparatus 11 to another onshore installation (not shown), e.g., a consumer, an offtake system 14 is used. The offtake system 14 is, for example, configured for transporting the hydrogen gas 12 by means of vehicles 15 on a road. Exemplarily, in Fig. 1 a tube trailer 15 is shown for transporting the hydrogen gas 12 to a place of consumption. In other examples, the offtake system 14 may be, for example, configured for transporting the hydrogen gas in transportation pipes (not shown).

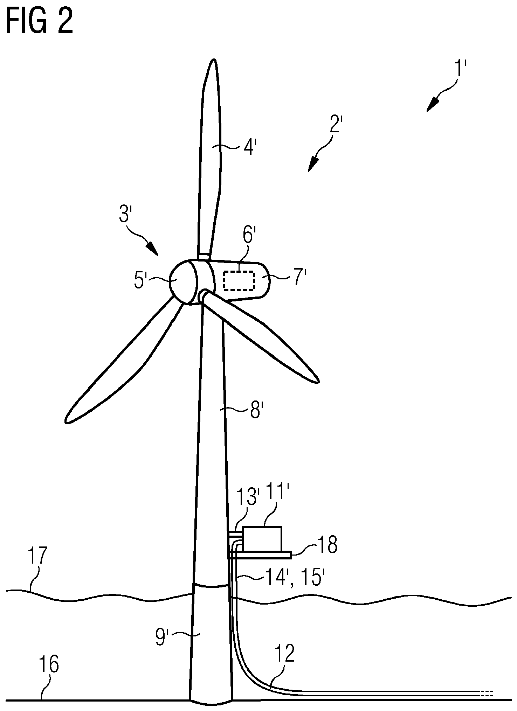

Fig. 2 shows a wind turbine arrangement 1' (as a further example of an electrical energy supply arrangement) according to a second embodiment. The wind turbine arrangement 1' is an offshore wind turbine arrangement comprising a wind turbine 2' (as a further example of an intermittent power source). Similar as the wind turbine 2 of Fig. 1, the wind turbine 2' comprises a rotor 3' having one or more blades 4' connected to a hub 5'. The hub 5' is connected to a generator 6' arranged inside a nacelle 7'. The nacelle 7' is arranged at the upper end of a tower 8' of the wind turbine 2'. The tower 8' is erected on a foundation 9' such as a monopile driven into the seabed 16. The reference sign 17 denotes a sea level.

The offshore wind turbine arrangement 1' also comprises a hydrogen production apparatus 11' for converting electrical energy generated by the generator 6' into hydrogen gas 12. The hydrogen production apparatus 11' of the offshore wind turbine 2' is, for example, arranged at least partially on an outside platform 18 of the tower 8'.

Further, the wind turbine arrangement 1' comprises an electrical cable 13' (only partly shown in the figures) for transporting electrical current generated by the generator 6' to the hydrogen production apparatus 11'. An offtake system 14' in the case of an offshore wind turbine 1' includes for example, a transportation pipe 15', as shown in Fig. 2. In other examples, the offtake system 14' may also include vessels such as ships to transport the gas 12 over sea.

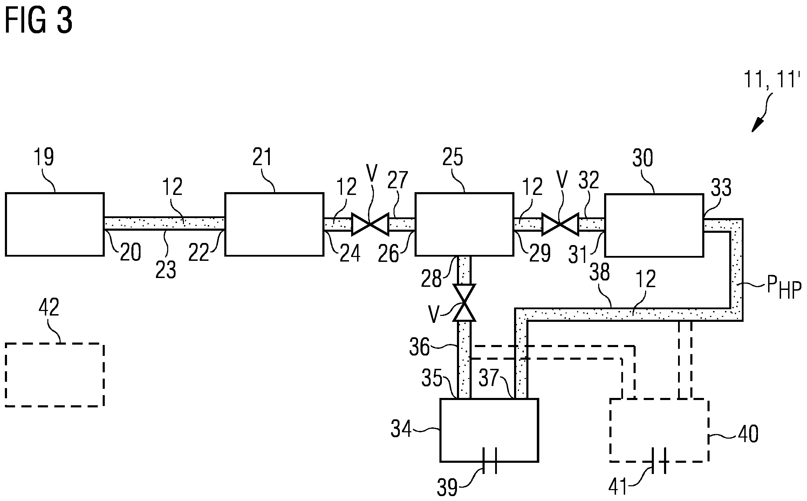

Fig. 3 shows a schematic view of the hydrogen production apparatus 11, 11' of the wind turbine arrangement 1 of Fig. 1 or of the wind turbine arrangement 1' of Fig. 2.

In the following, as an exemplar, a hydrogen production apparatus 11, 11' is described for converting energy produced by the wind turbine 2 into hydrogen gas. However, in other examples, the described hydrogen production apparatus 11, 11', 111 may also be applied for other renewable energy installations such as solar power plants, waterpower plants etc.

The hydrogen production apparatus 11, 11' comprises a hydrogen production unit 19 (electrolysis device) for converting water by use of the electrical energy generated by the generator 6, 6' into hydrogen gas 12 by electrolysis. A pressure of the hydrogen gas 12 produced by the electrolytic unit 19 has, for example, a low pressure (e.g., 35 bar). The hydrogen production unit 19 comprises an outlet 20.

The hydrogen production apparatus 11, 11' further comprises a first compressor unit 21 for compressing the produced hydrogen gas 12. The first compressor unit 21 is, in particular, configured to compress the hydrogen gas 12 to a medium pressure (MP) of, for example, 200 bar. The first compressor unit 21 may, therefore, also be called an MP compressor unit 21. The first compressor unit 21 includes, for example, a piston compressor (not shown) for decreasing the volume of the incoming hydrogen gas 12.

The first compressor unit 21 further includes an inlet 22 fluidly connected with the outlet 20 of the hydrogen production unit 19, e.g., by means of a gas pipe 23. The first compressor unit 21 further includes an outlet 24.

The hydrogen production apparatus 11, 11' further comprises a (first) tank 25 for storing the gas 12 compressed by the first compressor unit 21. The tank 25 may also be called an MP tank 25. The tank 25 comprises an inlet 26 fluidly connected with the outlet 24 of the first compressor unit 21, e.g., by means of a gas pipe 27. The tank 25 further includes a first outlet 28 and a second outlet 29.

The hydrogen production apparatus 11, 11' further comprises a a second compressor unit 30 for compressing hydrogen gas 12 supplied from the tank 25. The second compressor unit 30 is, in particular, configured to compress the hydrogen gas 12 to a high pressure (HP) of, for example, 450 bar. The second compressor unit 30 may, therefore, also be called an HP compressor unit 30. The second compressor unit 30 includes, for example, a diaphragm compressor (not shown) for decreasing the volume of the incoming hydrogen gas 12.

The second compressor unit 30 comprises an inlet 31 fluidly connected to the second outlet 29 of the tank 25, e.g., by means of a pipe 32. Further, the second compressor unit 30 comprises an outlet 33.

There may be a predetermined pressure value P_{off} (Fig. 1) of the offtake system 14, 14'. In this case, the hydrogen gas 12 needs to be provided by the hydrogen production apparatus 11, 11' with the predetermined pressure value P_{off}. The second compressor unit 30 is then, for example, configured to compress the hydrogen gas 12 supplied from the tank 25 to a pressure P_{HP} at or above the predetermined pressure value P_{off}.

The hydrogen production apparatus 11, 11' further comprises a a dispensing unit 34 for dispensing hydrogen gas 12 from the hydrogen production apparatus 11, 11' to the offtake system 14, 14'. The dispensing unit 34 comprises a first inlet 35 fluidly connected to the first outlet 28 of the tank 25, e.g., by a pipe 36. Further, the dispensing unit 34 comprises a second inlet 37 fluidly connected to the outlet 33 of the second compressor unit 30, e.g., by a pipe 38. Thus, the dispensing unit 34 can be fed by hydrogen gas 12 supplied directly from the tank 25 as well as by hydrogen gas 12 supplied from the second compressor unit 30.

The dispensing unit 34 comprises an outlet 39 for dispensing the hydrogen gas 12 to the offtake system 14, 14'.

As shown in dashed lines in Fig. 3, the hydrogen production apparatus 11, 11' may optionally also, for example, comprise more than one dispensing unit 34, 40. Exemplarily, a second dispensing unit 40 is shown in Fig. 3. The second dispensing unit 40 is similar as the first dispensing unit 34 fluidly connected to both the first outlet 28 of the tank 25 and the outlet 33 of the second compressor unit 30. The second dispensing unit 40 comprises an outlet 41 for dispensing the hydrogen gas 12 to the offtake system 14, 14'.

For example, a first transportation vessel 15 (Fig. 1) may be filled from the first dispenser unit 34 and a second transportation vessel (not shown) may be filled from the second dispenser unit 40. Filling the two transportation vessels 15 may be carried out simultaneously and/or in a timely (at least partially) overlapping manner.

The hydrogen production apparatus 11, 11' may optionally comprise a control unit 42 for controlling a gas flow, as illustrated in Fig. 3. The control unit 42 may, for example, be configured to control the tank 25 and the second compressor unit 30. The control unit 42 is in particular configured to control the gas flow such that during a first time period, hydrogen gas 12 is supplied directly from the tank 25 to the dispensing unit 34. Moreover, the control unit 42 is in particular configured to control the gas flow such that during a second time period, hydrogen gas 12 is supplied via the second compressor unit 30 to the dispensing unit 34.

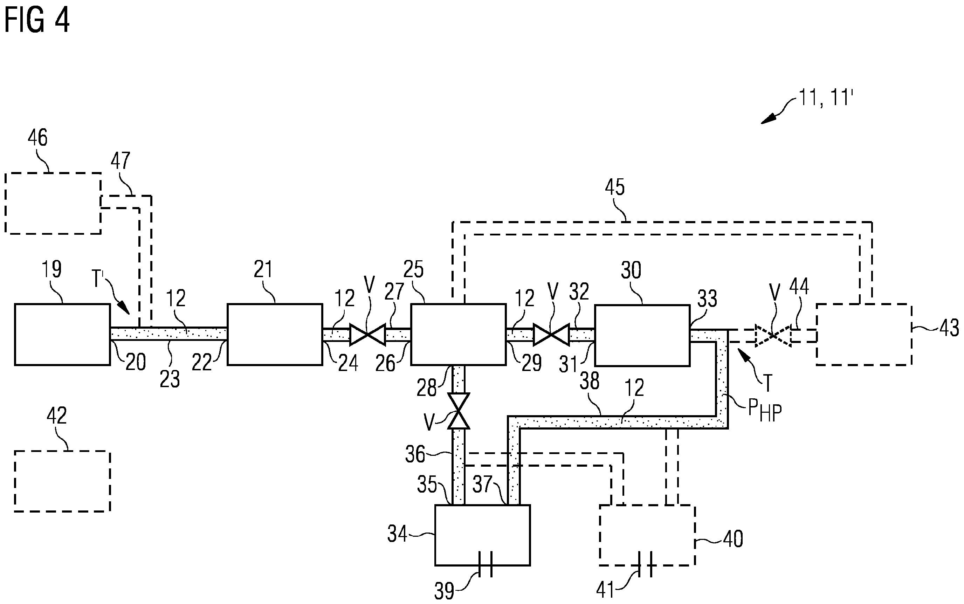

The hydrogen production apparatus 11, 11' comprises furthermore several valves V for controlling the flow of gas 12. Exemplarily, in Fig. 3, valves V at the pipes 27, 36, 32 are shown (and a valve V of the pipe 44 in Fig. 4). However, the hydrogen production apparatus 11, 11' may comprises further valves V not shown in the figures.

Fig. 4 shows several optional components of the hydrogen production apparatus 11, 11' of Fig. 3 in dashed lines.

As shown in Fig. 4, the hydrogen production apparatus 11, 11' may optionally comprise a second tank 43 (HP tank) fluidly connected to the outlet 33 of the second compressor unit 30 for storing the gas 12 compressed by the second compressor unit 30. Further, the second tank 43 is fluidly connected, e.g., by means of a gas pipe 44, to the one or more dispensing units 34, 40 for supplying hydrogen gas 12 from the second tank 43 to the one or more dispensing units 34, 40. In the example of Fig. 4, the fluid connection between the second compressor unit 30, the second tank 43 and the dispensing unit(s) 34, 40 is provided by a T-shaped pipe portion T, the T-shaped pipe portion T including portions of the pipe 44 and the pipe 38. However, also other fluid connection configurations are possible.

With the second tank 43 in which hydrogen gas 12 at high pressure is stored, the gas flow to the second inlet 37 of the dispensing unit 34 can be boosted. Further, during times when no hydrogen gas 12 is released from the dispensing units 34, 40, the second compressor unit 30 can continue to compress hydrogen gas 12 by filling the second tank 43.

Optionally, the hydrogen production apparatus 11, 11' may comprise a bypass gas pipe 45 fluidly connecting the first tank 25 and the second tank 43 for supplying hydrogen gas 12 from the second tank 43 to the first tank 25. The bypass pipe 45 provides a direct fluid connection between the first and second tanks 25, 43 through which hydrogen gas 12 in the second tank 43 can be re-directed to the first tank 25. This re-directed gas 12 will then pass once again through the second compressor unit 30 and is, thus, further compressed.

For example, when the pressure of the hydrogen gas 12 in the second tank 43 has fallen to a value below a predetermined value P_{off} during dispensing hydrogen gas 12 from the dispensing units 34, 40, the gas pressure can be increased by passing the gas 12 again through the second compressor unit 30.

Optionally, the hydrogen production apparatus 11, 11' may comprise a further tank 46 (third tank 46) fluidly connected to the hydrogen production unit 19 and the first compressor unit 21, e.g., by a pipe 47. In the example of Fig. 4, the fluid connection between the hydrogen production unit 19, the further tank 46 and the first compressor unit 21 is provided by a T-shaped pipe portion T', the T-shaped pipe portion T' including portions of the pipe 47 and the pipe 23. However, also other fluid connection configurations are possible.

The further tank 46 is configured for storing hydrogen gas 12 produced by the hydrogen production unit 19 and for supplying the stored hydrogen gas 12 to the first compressor unit 21. The further tank 46 stores hydrogen gas 12 at low pressure and is used to stabilize the inlet pressure of the (first) tank 21.

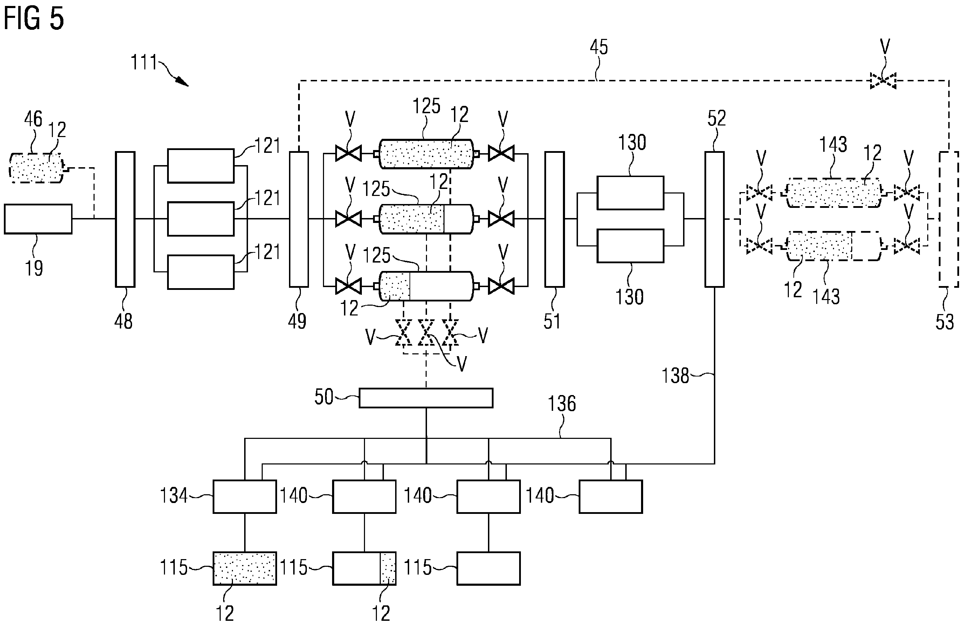

Fig. 5 shows a further embodiment of the hydrogen production apparatus 111. In the following, only differences to the embodiment of Fig. 4 are described.

The hydrogen production apparatus 111 comprises, for example, more than one first compressor unit 121 (in the shown example three). The hydrogen production unit 19 is fluidly connected to the multiple first compressor units 121 by means of a manifold 48.

The hydrogen production apparatus 111 comprises, for example, more than one first tank 125 (in the shown example three). The one or more first compressor units 121 are fluidly connected to the multiple first tanks 125 by means of a manifold 49. Further, the multiple first tanks 125 are fluidly connected to one or more dispensing units 134, 140 by means of a manifold 50.

The hydrogen production apparatus 111 further comprises, for example, more than one second compressor unit 130 (in the shown example two). The one or more first tanks 125 are fluidly connected to the multiple second compressor units 130 by means of a manifold 51.

The hydrogen production apparatus 111 comprises, for example, more than one second tank 143 (in the shown example two). The one or more second compressor units 130 are fluidly connected to the multiple second tanks 143 by means of a manifold 52.

Further, optionally, the multiple second tanks 143 are fluidly connected to a bypass manifold 53, the bypass manifold 53 being fluidly connected to the bypass gas pipe 45.

Although not shown in the figures, the described hydrogen production apparatus 11, 11', 111 may - instead of for a wind turbine 2, 2' - also be used for another intermittent power source or for an electrical grid.

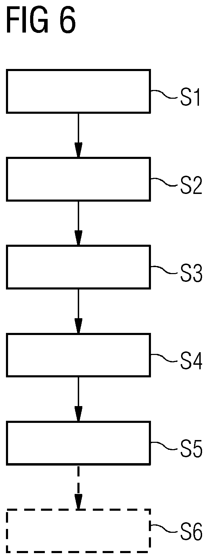

In the following, a method for operating a hydrogen production apparatus 11, 11', 111 of a wind turbine arrangement 1, 1' (as an example of an electrical energy supply arrangement) is described with reference to Fig. 6.

In other examples, the method may also be applied for operating a hydrogen production apparatus 11 of another intermittent power source or of an electrical grid.

In a first step S1 of the method, a hydrogen gas 12 is produced by electrolysis from electrical energy generated by the wind turbine 2, 2'.

In a second step S2 of the method, the produced hydrogen gas 12 is compressed by a first compressor unit 21.

In a third step S3 of the method, the gas 12 compressed by the first compressor unit 21 is stored in a (first) tank 25.

In a fourth step S4 of the method, hydrogen gas 12 supplied from the tank 25 is compressed by a second compressor unit 30.

In a fifth step S5 of the method, hydrogen gas 12 is dispensed from the hydrogen production apparatus 11, 11', 111 by providing hydrogen gas 12 directly from the tank 25 and/or via the second compressor unit 30.

For example, during a first time period, hydrogen gas 12 is directly supplied from the tank 25 to a dispensing unit 34 of the hydrogen production apparatus 11, 11', 111. For example, during a second time period, hydrogen gas 12 is supplied via the second compressor unit 30 to the dispensing unit 34.

In an optional sixth step S3 of the method, the hydrogen gas 12 compressed by the second compressor unit 30 is stored in a second tank 43.

With the proposed hydrogen production apparatus 11, 11', 111 and the proposed method to operate this apparatus, the production of hydrogen gas 12 which depends on the wind condition can be decoupled from the offtake of hydrogen gas 12 from the hydrogen production apparatus 11, 11', 111. Thus, hydrogen gas 12 can be provided to an offtake system 14, 14' during times in which no hydrogen gas 12 is produced by the apparatus 11, 11', 111. Further, hydrogen gas 12 can be produced during times in which no hydrogen gas 12 is discharged from the apparatus 11, 11', 111. Hence, hydrogen production can be adjusted to the wind conditions. Further, hydrogen gas offtake can be adjusted to requirements of the offtake system 14, 14'. Moreover, grid services to an electrical grid can be better provided using the hydrogen production unit 19 as an electrical load independent from the availability of an offtaker (e.g., a transportation vessel 15).

Although the present invention has been described in accordance with preferred embodiments, it is obvious for the person skilled in the art that modifications are possible in all embodiments.

## Claims

1. A hydrogen production apparatus (11) for an intermittent power source (2) and/or an electrical grid, comprising:
a hydrogen production unit (19) for producing hydrogen gas (12) from electrical energy generated by the intermittent power source (2) and/or supplied by the electrical grid,
a first compressor unit (21) for compressing the produced hydrogen gas (12),
a tank (25) for storing the gas (12) compressed by the first compressor unit (21), the tank (25) comprising a first and a second outlet (28, 29),
a second compressor unit (30) fluidly connected to the second outlet (29) of the tank (25) for compressing hydrogen gas (12) supplied from the tank (25), the second compressor unit (30) comprising an outlet (33), and
a dispensing unit (34) fluidly connected to both the first outlet (28) of the tank (25) and the outlet (33) of the second compressor unit (30) for dispensing gas (12) from the hydrogen production apparatus (11).

2. The hydrogen production apparatus according to claim 1, comprising two or more dispensing units (34, 40) each being fluidly connected to both the first outlet (28) of the tank (25) and the outlet (33) of the second compressor unit (30) for dispensing gas (12) from the hydrogen production apparatus (11).

3. The hydrogen production apparatus according to claim 1 or 2, wherein the second compressor unit (30) is configured to compress the hydrogen gas (12) supplied from the tank (25) to a pressure at or above a predetermined pressure value (P_{off}) of an offtake system (14).

4. The hydrogen production apparatus according to one of claims 1 - 3, wherein the tank (25) for storing the gas (12) compressed by the first compressor unit (21) is a first tank (25), the hydrogen production apparatus (11) comprises a second tank (43) fluidly connected to the second compressor unit (30) for storing the gas (12) compressed by the second compressor unit (30), and the second tank (43) is fluidly connected to the one or more dispensing units (34, 40) for supplying hydrogen gas (12) from the second tank (43) to the one or more dispensing units (34, 40).

5. The hydrogen production apparatus according to claim 4, comprising a bypass pipe (45) fluidly connecting the first tank (25) and the second tank (43) for supplying hydrogen gas (12) from the second tank (43) to the first tank (25).

6. The hydrogen production apparatus according to one of claims 1 - 5, comprising a control unit (42) for controlling a gas flow of the hydrogen production apparatus (11) such that:
during a first time period, hydrogen gas (12) is supplied directly from the first tank (25) to the dispensing unit (34), and
during a second time period, hydrogen gas (12) is supplied via the second compressor unit (30) to the dispensing unit (34).

7. The hydrogen production apparatus according to one of claims 1 - 6, comprising:
multiple first compressor units (121) and a manifold (48) for supplying the hydrogen gas (12) produced by the hydrogen production unit (19) to the multiple first compressor units (121),
multiple first tanks (125) and a manifold (49) for supplying the hydrogen gas (12) compressed by the one or more first compressor units (21, 121) to the multiple first tanks (125),
multiple second compressor units (130) and a manifold (50) for supplying the hydrogen gas (12) from the one or more first tanks (25, 125) to the multiple second compressor units (130), and/or
multiple second tanks (143) and a manifold (52) for supplying the hydrogen gas (12) compressed by the one or more second compressor units (30, 130) to the multiple second tanks (143).

8. The hydrogen production apparatus according to one of claims 1 - 7, wherein
the first compressor unit (21) comprises a reciprocating compressor, positive displacement compressor and/or a piston compressor, and/or
the second compressor unit (30) comprises a diaphragm compressor, reciprocating compressor, positive displacement compressor and/or a piston compressor.

9. The hydrogen production apparatus according to one of claims 1 - 8, comprising a further tank (46) fluidly connected to the hydrogen production unit (19) and the first compressor unit (21), wherein the further tank (46) is:
arranged upstream of the first compressor unit (21), and
configured for storing hydrogen gas (12) produced by the hydrogen production unit (19) and for supplying the stored hydrogen gas (12) to the first compressor unit (21).

10. An electrical energy supply arrangement (1) comprising
an intermittent power source (2) and/or an electrical grid, and
a hydrogen production apparatus (11) according to one of claims 1 - 9, wherein the hydrogen production unit (19) of the hydrogen production apparatus (11) is configured for producing hydrogen gas (12) from electrical energy generated by the intermittent power source (2) and/or supplied by the electrical grid.

11. A method for operating a hydrogen production apparatus (11) of an electrical energy supply arrangement (1), the electrical energy supply arrangement (1) comprising an intermittent power source (2) and/or an electrical grid, and the method comprises the steps:
a) producing (S1) hydrogen gas (12) by electrolysis from electrical energy supplied by the intermittent power source (2) and/or the electrical grid,
b) compressing (S2) the produced hydrogen gas (12) by a first compressor unit (21),
c) storing (S3) the gas (12) compressed by the first compressor unit (21) in a tank (25),
d) compressing (S4) hydrogen gas (12) supplied from the tank (25) by a second compressor unit (30), and
e) dispensing (S5) hydrogen gas (12) from the hydrogen production apparatus (11) by providing hydrogen gas (12) directly from the tank (25) and/or via the second compressor unit (30).

12. The method according to claim 11, wherein the hydrogen gas (12) is dispensed by the hydrogen production apparatus (11) :
during a first time period, by providing hydrogen gas (12) directly from the tank (25) to a dispensing unit (34) of the hydrogen production apparatus (11), and
during a second time period, by providing hydrogen gas (12) via the second compressor unit (30) to the dispensing unit (34).

13. The method according to claim 12, wherein, during the second time period, hydrogen gas (12) is dispensed by the hydrogen production apparatus (11) by providing hydrogen gas (12) directly from the tank (25) to a further dispensing unit (34) of the hydrogen production apparatus (11).

14. The method according to one of claims 11 to 13, wherein:
the tank (25) for storing the gas (12) compressed by the first compressor unit (21) is a first tank (25), and
the method comprises, after step d), the step of storing (S6) the hydrogen gas (12) compressed by the second compressor unit (30) in a second tank (43).

15. The hydrogen production apparatus (11) according to one of claims 1 - 9, the electrical energy supply arrangement (1) according to claim 10 or the method according to one of claims 11 - 14, wherein the intermittent power source (2) is a renewable energy installation (2), a wind turbine (2), a solar power installation, a photovoltaic installation, a water power installation, a hydropower installation, a hydroelectric installation and/or a tidal power installation.
